# FASCICULE DE BREVET EUROPEEN

(11) **EP 3 287 323 B1**
(45) Date de publication et mention de la délivrance du brevet: **06.03.2019**
(21) Numéro de dépôt: 17181609.3
(22) Date de dépôt: 17.07.2017
(51) Int. Cl.: B60R 13/02

(54) **ASSEMBLAGE D'UNE STRUCTURE D' HABILLAGE A UNE OUVERTURE REALISEE DANS UNE PAROI DE GARNITURE D'UN VEHICULE PRESENTANT DEUX PATTES DE RETENUE EN U**
MONTAGE EINER VERKLEIDUNGSSTRUKTUR IN EIN ÖFFNUNGSELEMENT IN EINER EINLAGEWAND EINES FAHRZEUGS, DIE MIT ZWEI U-FÖRMIGEN HALTEELEMENTEN AUSGESTATTET IST
ASSEMBLY OF A LINING STRUCTURE WITH AN OPENING MADE IN A TRIM WALL OF A VEHICLE HAVING TWO U-SHAPED RETAINING TABS

(30) Priorité: 26.08.2016 FR 1657948
(43) Date de publication de la demande: 28.02.2018
(73) Titulaire: RENAULT s.a.s., 92100 Boulogne-Billancourt (FR)
(72) Inventeur: BOUILLON, Jean-Charles, 78940 La Queue lez Yvelines (FR)

(56) Documents cités:
- JP-A- 2001 105 988
- JP-A- 2001 213 233
- JP-A- 2003 090 311

## Description

L'invention concerne l'assemblage d'une structure d'habillage à une ouverture réalisée dans une paroi de garniture d'un véhicule présentant deux pattes de retenue en U. Une telle structure d'habillage peut notamment recevoir un cache pour obturer cette ouverture lorsqu'elle ne sert pas et/ou recevoir un élément de maintien par exemple pour un crochet ou similaire. L'invention est plus particulièrement adaptée à une paroi de garniture de pavillon de véhicule automobile, mais peut être utilisée pour toute paroi de garniture d'un habitacle de véhicule.

Des ouvertures sont souvent réalisées dans des parois de garniture de véhicule, notamment des parois de l'habitacle. De telles ouvertures peuvent servir à la fixation d'éléments internes à l'habitacle, tels que par exemple des crochets de retenue de filet ou autre. Ces ouvertures sont habituellement habillées par une structure d'habillage qui comprend une partie de retenue fixée sur une face non visible de la paroi de garniture coopérant avec une partie d'habillage située du côté d'une face visible de la paroi de garniture. En général, la partie d'habillage est simplement clipsée sur la partie de retenue en prenant en sandwich les bords de l'ouverture de la paroi de garniture.

Pour des raisons de sécurité, il peut être prévu que la paroi de garniture puisse être déformée en cas de choc. A cet effet, la paroi de garniture peut présenter une pliure, ce qui peut entrainer la désolidarisation de la structure d'habillage clippée sur celle-ci. Un tel phénomène peut provoquer l'éjection d'une partie ou de la totalité de la structure d'habillage hors de l'ouverture. Ce phénomène peut être accru lorsque la déformation de la paroi de garniture est provoquée par le déploiement brusque d'un coussin gonflable (air-bag). Afin d'éviter l'éjection de tout ou partie de la structure d'habillage, il est possible de coller tout ou partie de la structure d'habillage sur la face non visible de la paroi de garniture. Cette solution présente l'inconvénient d'être couteuse et peut présenter un taux de rebut significatif, le collage étant généralement réalisé manuellement. En outre, ce collage peut ne pas suffire à éviter l'éjection de la totalité de la structure d'habillage ou de parties fragmentées de celle-ci.

Il existe donc un besoin pour un assemblage d'une structure d'habillage à une ouverture de paroi de garniture qui soit efficace, même en cas de déformation de la paroi de garniture, notamment résultant d'un choc et/ou du déploiement d'un air-bag.

Le document JP 2003 090311 A décrit un assemblage d'une structure d'habillage à une ouverture de paroi de garniture selon le préambule de la revendication 1.

A cet effet, l'objet de l'invention concerne un assemblage d'une structure d'habillage à une ouverture de paroi de garniture, cette paroi de garniture présentant une face cachée et une face opposée visible, la structure d'habillage comprenant un élément de retenue situé du côté de la face cachée en appui contre celle-ci et un élément d'habillage situé en partie du côté de la face visible et solidarisé à l'élément de retenue, l'élément d'habillage présentant un rebord externe encadrant l'ouverture et en appui contre la face visible, un rebord interne traversant l'ouverture et coopérant avec l'élément de retenue du côté de la face cachée, le rebord interne définissant un cadre dont deux côtés opposés sont prolongés par des portions de paroi suivant une direction sensiblement perpendiculaire à la paroi de garniture, un barreau s'étendant le long d'un autre côté du rebord interne, à distance de ce dernier, reliant des extrémités desdites portions de paroi.

Selon l'invention, l'élément de retenue comprend :
- un cadre en forme de U comprenant deux bras opposés reliés à une de leurs extrémités par un bras de liaison, ledit cadre en forme de U étant disposé autour du rebord interne de l'élément d'habillage, en coopération avec ce dernier, ce cadre étant suffisamment grand pour ne pas traverser l'ouverture,
- deux pattes de retenue en forme de U, chaque patte de retenue comprenant un premier bras dont une extrémité est reliée à l'un des bras opposés du cadre en forme de U, à distance dudit bras de liaison du cadre en forme de U et à proximité dudit barreau, ces premiers bras s'étendant dans un même plan sensiblement parallèle à la paroi de garniture, et passant entre le barreau et le côté du rebord interne le long duquel s'étend le barreau, et chaque patte de retenue présentant un deuxième bras s'étendant dans un plan incliné par rapport au plan des premiers bras et dont une extrémité libre est située au moins partiellement en regard d'une face externe du barreau de l'élément d'habillage, à une distance prédéterminée de celle-ci.

Du fait de l'agencement particulier des pattes de retenue et du barreau de l'élément d'habillage, lors d'un choc entrainant l'élément d'habillage en dehors de l'ouverture du côté de la face visible, le barreau de l'élément d'habillage va venir buter contre l'extrémité libre du deuxième bras de l'une ou des deux pattes de retenue, laquelle (ou lesquelles) va (vont) glisser contre le barreau, provoquant le basculement de l'élément d'habillage, le reste de l'élément d'habillage n'étant pas retenu par l'élément de retenue. Ce basculement ou rotation va provoquer l'insertion du barreau de l'élément d'habillage dans le creux en V formé entre les premier et deuxième bras de l'une ou des deux pattes de retenue. On obtient ainsi l'accrochage de l'élément d'habillage et on évite son éjection complète hors de l'ouverture de la paroi de pavillon.

L'extrémité libre du deuxième bras de chaque patte de retenue est située au moins partiellement en regard d'une face externe du barreau. Notamment, cette extrémité libre et la face externe sont en regard sur une distance prédéterminée non nulle, par exemple d'au moins 1mm et de préférence de 1 à 5mm.

Cette extrémité libre du deuxième bras de chaque patte de retenue est en outre à une distance prédéterminée de la face externe du barreau. Avantageusement, cette distance prédéterminée est la plus faible possible, mais de préférence suffisamment grande pour assurer un montage de l'élément de retenue et de l'élément d'habillage. On pourrait néanmoins envisager que cette distance soit nulle (l'extrémité libre est alors en appui contre le barreau).

Avantageusement, quelque soit le mode de réalisation, les pattes de retenue peuvent ainsi être conformées pour, sous l'effet d'une contrainte externe, subir une déformation réversible vers un état déformé, dans lequel leurs premier et deuxième bras s'étendent sensiblement dans un même plan. A cet effet, l'homme du métier pourra choisir par exemple un matériau adapté et/ou une inclinaison particulière du deuxième bras. Alternativement ou en combinaison, l'espace séparant le barreau et le côté du rebord interne le long duquel le barreau s'étend, peut être choisi suffisamment grand pour laisser passer les pattes de retenue dans un tel état déformé.

Avantageusement, l'élément de retenue peut en outre comprendre une nervure de rigidification reliant les premiers bras des pattes de retenue.

La présence de la nervure de rigidification permet de limiter davantage l'ouverture du cadre en forme de U (l'écartement des bras opposés du U) en cas de choc, ce qui pourrait avoir pour effet de libérer le rebord interne de l'élément d'habillage du cadre en forme de U de l'élément de retenue. L'augmentation de la rigidité du cadre en forme de U résultant de la présence de la nervure de rigidification permet ainsi d'améliorer le maintien de l'élément d'habillage par l'élément de retenue.

La nervure de rigidification peut notamment s'étendre sensiblement parallèlement au barreau, facilitant sa réalisation.

Cette nervure de rigidification peut être choisie parmi :
∘ une nervure de rigidification reliant les premiers bras du côté de reliée au cadre en forme de U,
∘ une nervure de rigidification reliant les premiers bras à distance de reliée au cadre en forme de U, entre leur autre extrémité reliée à un deuxième bras et le barreau, notamment à proximité de cette autre extrémité.

L'assemblage selon l'invention, avec ou sans nervure de rigidification, peut en outre comporter une ou plusieurs des caractéristiques suivantes :
- les deux pattes de retenue sont disposées symétriquement par rapport à un plan médian du cadre en U, ce plan médian étant perpendiculaire à un plan défini par le cadre en U et étant équidistant des bras opposés du cadre en U. Ceci peut favoriser le basculement de l'élément d'habillage et par conséquent son accrochage au moyen de la (ou des) patte(s) de retenue.
- Les deuxièmes bras des deux pattes de retenue sont disposés l'un en regard de l'autre. Cet agencement peut également favoriser le basculement de l'élément d'habillage.
- Les pattes de retenue sont telles que le plan de chaque deuxième bras définit avec le plan de chaque premier bras un angle compris de 10 à 45°, de préférence de 10 à 30°. Un tel agencement peut faciliter l'insertion du barreau entre les premier et deuxième bras d'une patte de retenue lors du basculement de l'élément d'habillage. De préférence, cet angle est le même pour les deux pattes de retenue.

- Les premiers bras des pattes de retenue sont chacun reliés au cadre en forme de U par une patte de liaison sensiblement parallèle au barreau. En particulier, chaque patte de liaison peut comprendre un logement recevant une portion de paroi du rebord interne. Ces logements peuvent guider le basculement de l'élément d'habillage par rapport à l'élément de retenue, favorisant la retenue de l'élément d'habillage.
- Le rebord interne de l'élément d'habillage présente le long de ses côtés prolongés par les portions de paroi, sur des faces en regard de ces côtés, deux pattes allongées s'étendant sensiblement perpendiculairement au barreau, et faisant saillie hors de l'élément d'habillage d'un même côté de celui-ci en traversant l'espace séparant le barreau du côté du rebord interne le long duquel il s'étend. De telles pattes peuvent également favoriser le basculement de l'élément d'habillage autour de la nervure de rigidification.
- L'élément d'habillage présente un volet obturant l'ouverture de la paroi de garniture. Un tel volet peut en outre être conformé pour coopérer avec un organe, par exemple un crochet ou autre. Avantageusement, ce volet peut être monté coulissant sur l'élément d'habillage, par exemple guidé par les pattes allongées précédemment mentionnées, ce qui peut permettre d'accéder à l'ouverture ou de changer le volet.
- L'élément de retenue est réalisé d'une pièce en matériau polymère, par exemple par moulage.

La paroi de garniture de l'assemblage selon l'invention peut être une paroi de pavillon de véhicule automobile ou encore une paroi de garniture faisant partie d'un habitacle de véhicule lequel peut être terrestre, aérien ou autre.

L'invention concerne également un véhicule, notamment terrestre ou aérien, comprenant un assemblage selon l'invention. En particulier, cet assemblage peut concerner une paroi de garniture d'un habitacle de ce véhicule.

L'invention est maintenant décrite en référence aux dessins annexés, non limitatifs, dans lesquels :
- la figure 1 représente une vue en perspective partielle d'un assemblage d'une structure d'habillage à une ouverture de paroi de garniture selon un mode de réalisation de l'invention, la paroi étant dans un état non déformé ;
- la figure 2 est une vue similaire à la figure 1, la paroi étant dans un état déformé ;
- la figure 3 est une vue de l'assemblage représenté sur les figures 1 et 2, du côté de la face cachée de la paroi de garniture ;
- la figure 4 est une représentation en perspective de l'élément de retenue de la structure d'assemblage représentée sur les figures 1 à 3 ;
- les figures 5a et 5b sont des représentations en perspective de deux autres modes de réalisation selon l'invention d'un élément de retenue d'une structure d'assemblage ;
- la figure 6 est une vue en perspective de l'élément d'habillage de la structure d'assemblage représentée sur les figures 1 à 4, le volet étant ôté ;
- la figure 7 représente une vue en perspective d'un volet coopérant avant l'élément d'habillage représenté figure 6 ;
- la figure 8 est une vue en coupe suivant la ligne A-A de la figure 3.

Par sensiblement parallèle ou perpendiculaire, on entend une direction s'écartant d'au plus ±20°, voire d'au plus 10° ou d'au plus 5° d'une direction parallèle ou perpendiculaire.

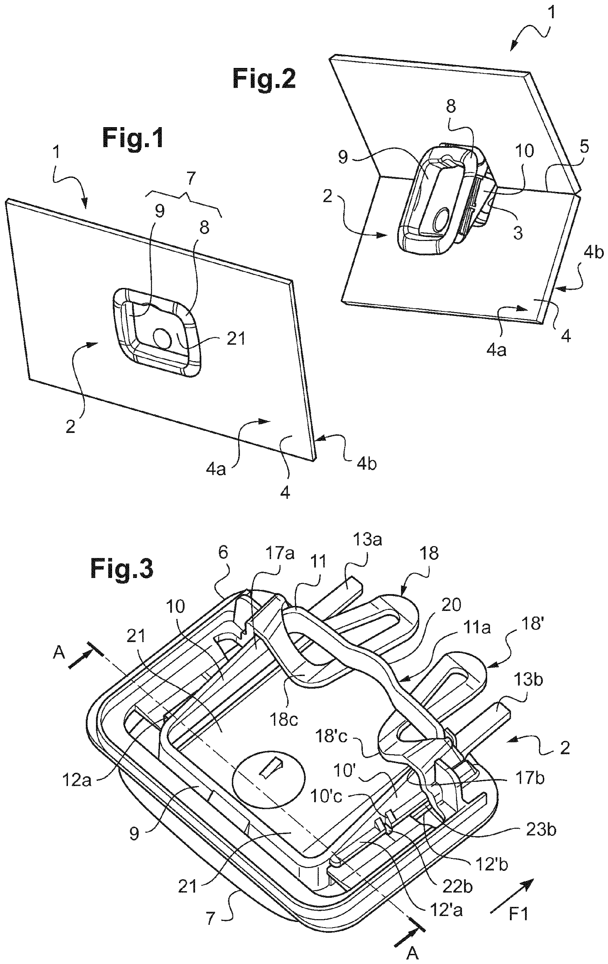

Les figures 1 et 2 représentent un assemblage 1 d'une structure d'habillage 2 à une ouverture 3 de paroi de garniture 4. Sur la figure 1, la paroi de garniture 4 est sensiblement plane, au moins à proximité immédiate de l'ouverture 3, et dans un état non déformé. Il s'agit de son état d'utilisation habituelle. Sur la figure 2, cette paroi 4 est déformée, ici par pliage le long de la ligne 5. Cette paroi de garniture 4 est destinée à faire partie de l'habitacle d'un véhicule terrestre ou aérien, notamment d'un véhicule automobile.

La paroi de garniture 4 présente ainsi une face 4a visible des occupants de l'habitacle et une face opposée 4b cachée aux occupants.

La structure d'habillage 2 comprend un élément de retenue 6 situé du côté de la face cachée 4b de la paroi de garniture 4 et un élément d'habillage 7 situé en partie du côté de la face visible 4a de la paroi de garniture 4. L'élément de retenue 6, visible sur les figures 3 à 5aa, 5b et 8, est en appui contre la face cachée 4b.

L'élément d'habillage 7 est solidarisé à l'élément de retenue 6, de préférence de manière non définitive. Quelque soit la forme de l'élément d'habillage 7 et de l'élément de retenue 6, cette solidarisation peut être obtenue par coopération, notamment par coopération de parties complémentaires, par exemple par clippage, emboitement, notamment par coulissement, combinaison des deux ou autre.

L'élément d'habillage 7 présente un rebord externe 8 qui encadre l'ouverture 3, notamment entièrement, et est en appui contre la face visible 4a de la paroi de garniture 4 (figures 1, 2, 8). L'élément d'habillage 7 comprend en outre un rebord interne 9 qui traverse l'ouverture 3 et coopère avec l'élément de retenue 6 du côté de la face cachée 4b.

Dans l'exemple représenté, le rebord interne 9 forme une paroi qui s'étend sensiblement perpendiculairement à la paroi de garniture 4 lorsque celle-ci est non déformée, depuis le rebord externe 8 au travers de l'ouverture 3. On notera ainsi que le cadre défini par le rebord interne 9 présente ici des dimensions correspondant sensiblement aux dimensions de l'ouverture 3. Le rebord interne 9 forme ici un cadre à quatre côtés 9a, 9b, 9c, 9d, opposés deux à deux.

Le rebord interne 9 est prolongé sur deux de ses côtés opposés 9a, 9b, suivant une direction sensiblement perpendiculaire à la paroi de garniture 4, par deux portions de parois 10 et 10'. Ces portions de paroi 10, 10' s'étendent ainsi sensiblement perpendiculairement à la face cachée 4b, en s'éloignant de celle-ci.

Dans le mode de réalisation représenté, chaque côté 9a, 9b prolongé par une portion de paroi 10, 10', présente deux nervures 12a, 12b/ 12'a, 12'b et définissant entre elles une rainure 23a, 23b pouvant recevoir une languette solidaire de l'élément de retenue 6. Ces nervures 12a, 12b /12'a, 12'b sont disposées sur les faces des côtés 9a, 9b qui ne sont pas en regard.

Dans l'exemple, on notera que les nervures d'une même paire ne sont pas parallèles mais convergentes, chaque nervure étant par ailleurs rectiligne. Cette convergence est observée dans une direction d'insertion de l'élément de retenue dans l'élément d'habillage qui sera décrite plus loin, symbolisée par la flèche F1 sur les figures 3 et 4 à 7. En outre, dans l'exemple, une nervure 12a, 12'a de chaque paire de nervures (ici la nervure la plus éloignée de la face cachée 4b) présente une interruption ou échancrure 10c, 10'c recevant un ergot 22a, 22b correspondant solidaire de l'élément de retenue 6. Les ergots 22a, 22b peuvent permettre l'indexation de l'élément de retenue 6 et de l'élément d'habillage 7 suivant la direction d'insertion F1.

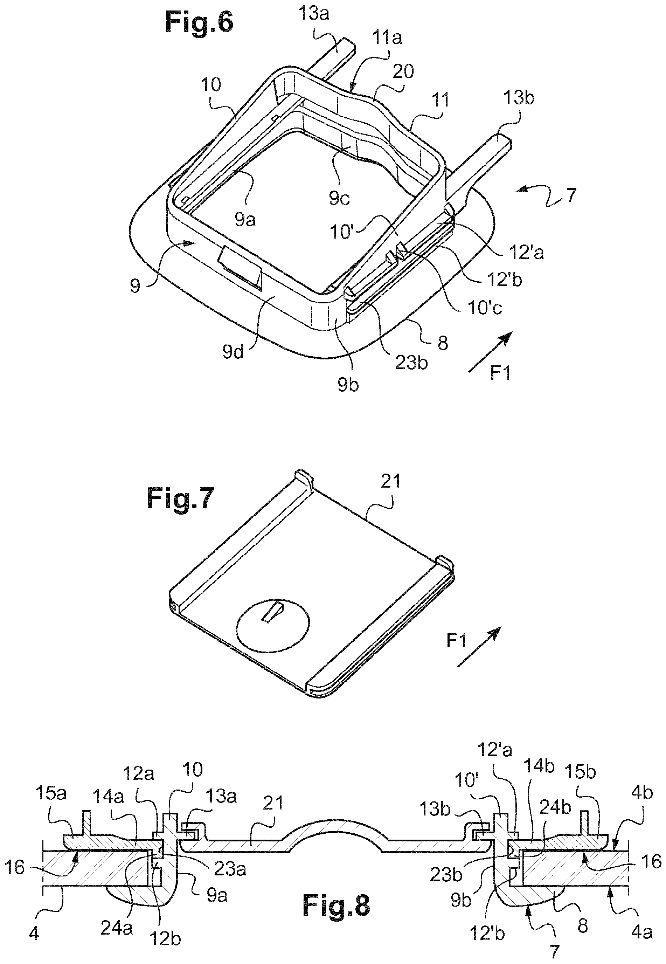

Les deux portions de parois 10, 10' du rebord interne 9 sont reliées à une de leurs extrémités par un barreau 11, distinct du rebord interne 9. Ce barreau 11 s'étend le long du côté 9c du rebord interne, à distance de ce dernier. Seules les extrémités du barreau 11 sont reliées aux portions de parois 10, 10'. Autrement dit, un espace libre est formé entre le barreau 11 et le côté 9c du rebord interne 9 lorsque la structure d'habillage 2 est montée (fig. 3, 6). A noter que le barreau 11 s'étend ici sensiblement au dessus du côté 9c.

Dans l'exemple, les portions de paroi 10, 10' présentent chacune une forme sensiblement triangulaire. Les parties les plus hautes des deux portions de paroi 10, 10' (suivant une direction perpendiculaire à la face cachée 4b) sont reliées par le barreau 11.

Dans le mode de réalisation particulier représenté sur les figures, l'élément d'habillage 7 présente en outre deux pattes allongées 13a, 13b situées de part et d'autre de l'élément d'habillage 7, du côté de la face cachée 4b de la paroi de garniture, s'étendant sensiblement parallèlement à celle-ci (fig.3, 6, 8). Ces pattes allongées 13a, 13b s'étendent sensiblement perpendiculairement au barreau 11, le long des faces en regard des côtés 9a, 9b prolongés par les portions de paroi 10, 10' et font saillie d'un même côté de l'élément d'habillage 7, via l'espace séparant le rebord interne 9 (le côté 9c) et le barreau 11 Ces pattes allongées 13a, 13b s'étendent ici sur toute la longueur des côtés 9a, 9b respectivement. Les pattes allongées 13a, 13b s'étendent ainsi sensiblement parallèlement à la face d'envers 4b de la garniture d'habillage 4, avec un jeu réduit, ce qui permet un pré-clippage de l'élément d'habillage 7 sur la garniture 4, avant le montage de l'élément de retenue 6.

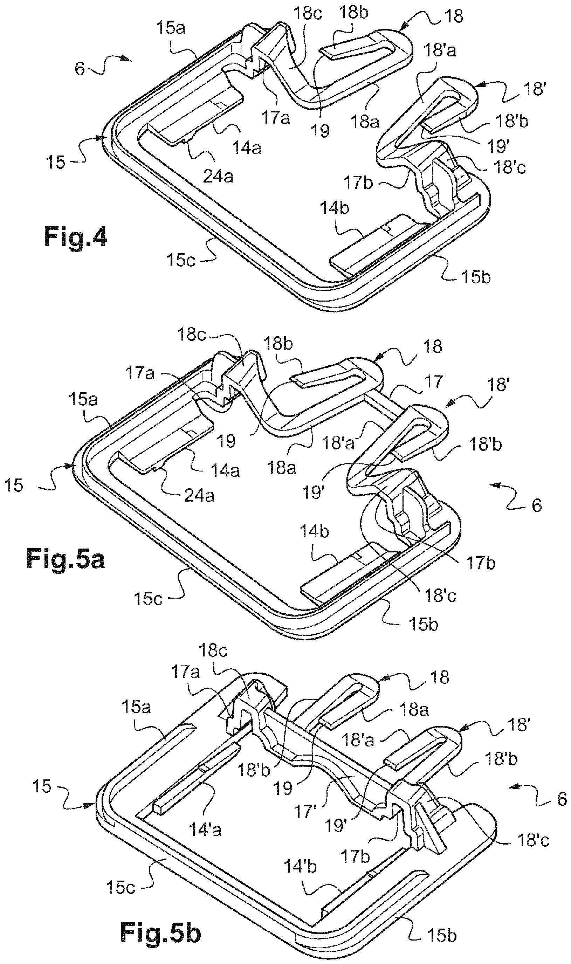

L'élément de retenue 6 est décrit notamment en référence aux figures 4 et 5a, 5b. A noter que les modes de réalisation de ces trois figures varient essentiellement par la présence/absence d'une nervure de rigidification 17, 17' et sa position. Les autres éléments représentés sont identiques et sont désignés par les mêmes références.

L'élément de retenue 6 comprend un cadre 15 en forme de U suffisamment grand pour ne pas traverser l'ouverture 3. Ce cadre 15 est disposé autour du rebord interne 9 de l'élément d'habillage 7. Le cadre 15 coopère en outre avec le rebord interne 9 de l'élément d'habillage 7 pour maintenir ce dernier en position.

Le cadre 15 comprend deux bras opposés 15a, 15b reliés à une de leurs extrémités par un bras de liaison 15c.

Le cadre 15 présente ici une face d'appui 16 sensiblement plane et venant en appui contre la face cachée 4b de la paroi de garniture, autour de l'ouverture 3.

Ici, le cadre 15 est en outre pourvu de languettes 14a, 14b (fig. 4, 5a) ; 14'a, 14'b (fig.5b) situées en regard l'une de l'autre et agencées de manière à coopérer avec les nervures 12a, 12b, respectivement 12'a, 12'b des côtés 9a, 9b prolongés par les portions de paroi 10, 10'.

Les languettes 14a et 14b peuvent présenter une épaisseur réduite afin de former des lames ressort. Leur épaisseur peut ainsi définir l'effort de désolidarisation des deux pièces 6 et 7. A titre d'exemple, cette épaisseur peut être de 0,8 à 2,2 mm suivant la largeur des languettes, de préférence ici 1,2 mm.

Les languettes 14a, 14b forment ainsi des liaisons programmables et débrayables entre les pièces 6 et 7. Ces liaisons peuvent permettre de libérer l'énergie des contraintes subies lors du déploiement de l'airbag et d'éviter ainsi la casse d'une des deux pièces. La matière utilisée pour les languettes est de préférence un polymère, par exemple choisi parmi le polyoxyméthylène (POM) et polyamide (PA), notamment un polymère modifié, par exemple chargé en fibres de verre ou autres, présentant une bonne résistance aux chocs. Cette solution présente une utilité particulière lors des déploiements d'airbag sous des températures très basses (- 20 à - 30°C).

Les languettes 14a, 14b ; 14'a, 14'b et les nervures associées forment des éléments de mise en prise assurant une solidarisation réversible de l'élément d'habillage 7 et de l'élément de retenue 6. L'invention n'est toutefois pas limitée à des éléments de mise en prise particuliers.

On notera en outre que dans les exemples représentés fig.4, 5a, 8, le bord libre des languettes 14a, 14b, inséré entre les nervures, présente une surépaisseur ou talon 24a, 24b permettant de compenser la différence d'épaisseur entre l'espace 23a, 23b séparant les nervures et l'épaisseur ajustable des languettes 14a et 14b. Ces talons 24a, 24b peuvent participer au calage anti vibratoire entre les pièces 6 et 7 au niveau de la liaison avec les languettes 14a et 14b.

L'élément de retenue 6 comprend deux pattes de retenue 18, 18' en forme de U, comportant chacune un premier bras 18a, 18'a et un deuxième bras 18b, 18'b. Une extrémité de chaque premier bras 18a, 18'a est reliée à l'un 15a, 15b des bras opposés du cadre en forme de U 15, à distance du bras de liaison 15c du cadre 15 et à proximité du barreau 11. L'autre extrémité de chaque premier bras 18a, 18'a est reliée à une extrémité du deuxième bras 18b, 18'b. Les premiers bras 18a, 18'a s'étendent dans un même plan sensiblement parallèle à la paroi de garniture 4, et passent entre le barreau 11 et le côté 9c du rebord interne. A cet effet, l'espace séparant le barreau 11 et le côté 9c est suffisamment grand. Les deuxièmes bras 18b, 18'b s'étendent dans un plan incliné par rapport au plan des bras 18a, 18'a et leur extrémité libre 19, 19' est située au moins partiellement en regard du barreau 11 de l'élément d'habillage, notamment en regard d'une face 11a de celui-ci externe au rebord interne 9 de l'élément d'habillage (fig.3).

Dans les exemples, on note que des pattes de liaison 18c, 18'c relient les premiers bras 18a, 18'a aux côtés 15a, 15b, respectivement du cadre 15. Ces pattes de liaison 18c, 18'c s'étendent ici sensiblement parallèlement au barreau 11, autrement dit au bras de liaison 15c.

Ici, les deux pattes de retenue 18, 18' sont disposées symétriquement par rapport à un plan médian du cadre en U, perpendiculaire à un plan défini par le cadre en U et passant par le milieu du bras de liaison 15c. Les deuxièmes bras 18b, 18'b des deux pattes de retenue sont en outre disposés l'un en regard de l'autre.

Dans les trois modes de réalisation représentés, les extrémités libres 19, 19' des deuxièmes bras 18b, 18'b sont en regard du barreau 11, de part et d'autre d'une partie convexe 20 (Fig.3), dont la convexité est dirigée vers l'extérieur du rebord interne 9.

De préférence, chaque extrémité 19, 19' est située en regard du barreau 11 sur une hauteur du barreau 11 (suivant une direction perpendiculaire à la paroi de garniture 4) d'au minimum 1 mm, par exemple de 1 à 5mm.

Les pattes de retenue 18, 18' en forme de U sont telles que le plan de chaque deuxième bras 18b, 18'b définit avec le plan de chaque premier bras 18a, 18'a un angle compris de 10 à 45°, de préférence de 10 à 30°, par exemple de 20°. La présente invention n'est toutefois pas limitée par un angle particulier pourvu que les deuxièmes bras 18b, 18'b soient au moins partiellement en regard du barreau 11, de préférence sur une hauteur d'au moins 1mm, lorsque l'élément d'habillage 7 est solidarisé à l'élément de retenue 6. De préférence, cet angle et/ou le matériau de chaque patte de retenue 18, 18' sera choisi pour permettre une déformation réversible de celle-ci vers un état déformé dans lequel son premier bras s'étend sensiblement dans le même plan que son deuxième bras, facilitant ainsi le montage de l'élément de retenue et de l'élément d'habillage.

Dans les modes de réalisation des figures 5a et 5b, l'élément de retenue 6 comprend en outre une nervure de rigidification 17, 17', respectivement, reliant les premiers bras 18a, 18'a des pattes de retenue. Les bras opposés 15a, 15b du cadre en U sont ainsi reliés l'un à l'autre via les premiers bras 18a, 18'a et la nervure de rigidification 17, 17'.

Cette nervure de rigidification 17, 17' permet d'éviter l'écartement des bras 15a, 15b du cadre 15. Elle s'étend ici à distance de la face d'appui 16. Cette nervure de rigidification peut relier les premiers bras d'un côté ou de l'autre du barreau 11 suivant la direction longitudinale des bras.

Ainsi, dans le mode de réalisation représenté fig. 5a, la nervure de rigidification 17 relie les premiers bras 18a, 18'a à distance de reliée au cadre en forme de U 15, entre leur autre extrémité reliée à un deuxième bras 18b, 18'b et le barreau 11. Dans l'exemple, la nervure de rigidification 17 est adjacente à cette autre extrémité.

Dans le mode de réalisation représenté fig. 5b, la nervure de rigidification 17' relie les premiers bras 18a, 18'a du côté de reliée au cadre en forme de U. On notera ici que la nervure de rigidification 17' s'étend dans le prolongement des pattes de liaison 18c, 18'c reliant les premiers bras 18a, 18'a aux côtés 15a, 15b du cadre 15. La nervure de rigidification 17' s'étend ici à proximité du barreau 11, entre celui-ci et le côté opposé 9d du rebord interne 9, en regard d'une ouverture définie par le rebord interne 9 de l'élément d'habillage.

Dans les deux modes de réalisation (fig.5a, 5b), la nervure de rigidification 17, 17' s'étend sensiblement parallèlement au barreau 11. Une autre orientation peut toutefois être envisagée pourvu que la nervure de rigidification limite l'écartement des bras opposés 15a, 15b du cadre 15.

Dans les exemples représentés, les pattes de liaison 18c, 18'c des pattes de retenue 18a, 18'a comprennent enfin chacune un logement 17a, 17b recevant une portion de paroi 10, 10', respectivement, du rebord interne 9. Ces logements 17a, 17b sont donc ouverts en direction de la face cachée 4b de la paroi de garniture 4. Ils sont disposés de part et d'autre des pattes de retenue 18, 18'.

On notera que les extrémités des premiers bras 18a, 18'a de chaque patte de retenue 18, 18' solidaires des pattes de liaison 18c, 18'c peuvent présenter une section transversale de dimension supérieure à la section transversale à l'autre extrémité de ces bras solidaires reliée à un deuxième bras (fig.3, 4, 5a, 5b), ce qui permet d'améliorer la robustesse de la patte de retenue 18, 18'.

Dans l'exemple représenté, l'élément d'habillage 7 présente également un volet 21 obturant l'ouverture définie par le rebord interne 9, et par conséquent l'ouverture 3 de la paroi de garniture 4. Ce volet 21 est monté coulissant du côté de la face cachée 4b, le long des pattes allongées 13a, 13b, suivant la direction longitudinale de ces pattes allongées 13a, 13b qui lui servent de rails de guidage (voir Fig. 6). Le volet 21 passe par ailleurs entre le cadre défini par le rebord interne 9 et les pattes de retenue 18, 18'. Autrement dit, ce volet 21 est monté sur le rebord interne 9 et peut coulisser en traversant l'espace séparant le barreau 11 du côté 9c du rebord interne 9. Un tel volet est optionnel.

Le montage de la structure d'habillage 2 peut être réalisé de la manière suivante. L'élément d'habillage 7 est appliqué contre la face visible 4a de la paroi de garniture 4, son rebord interne 9 traversant l'ouverture 3. L'élément de retenue 6 est alors mis en place du côté de la face cachée 4b par une translation suivant la direction d'insertion F1 des bras 15a et 15b, les languettes 14a, 14b ; 14'a, 14'b coopérant avec les nervures 12a, 12b et 12'a 12'b du rebord interne. Dans le même mouvement, les pattes de retenue 18, 18' passent en se déformant dans l'espace séparant le barreau 11 et le rebord interne 9 et viennent, en retrouvant leur forme initiale, partiellement en regard de la surface externe 11a du barreau 11. Dans le même mouvement les ergots 22a et 22b coopérant avec les échancrures 10c, 10'c, donnent la position finale de l'assemblage. L'assemblage obtenu est alors tel que représenté sur les figures 1 et 3.

En cas de choc entrainant une déformation de la paroi de garniture 4, par exemple par pliage le long de la ligne 5, tel que représenté sur la figure 2, l'élément d'habillage 7 peut se désolidariser partiellement de l'élément de retenue 6, libérant ainsi le trop plein d'énergie qui pourrait casser les pièces, tout en maintenant les pièces 7, 21 et 6 étroitement liées avec la garniture d'habillage 4.

L'élément d'habillage 7 peut en effet basculer par rapport au barreau 11. Dans le mode de réalisation des figures 4 et 5a, l'élément d'habillage peut pivoter autour d'un axe sensiblement confondu avec l'une des portions de paroi 10, 10'. Dans le mode de réalisation de la figure 5b, l'élément d'habillage peut pivoter autour d'un axe sensiblement confondu avec le barreau 11. On notera que les logements 17a, 17b servent alors de guides pour les portions de parois 10, 10' de l'élément d'habillage, facilitant la rotation de celui-ci.

Dans les différents mode de réalisation, le barreau 11, initialement en regard d'une partie des extrémités libres des deuxièmes bras 18b, 18'b des pattes de retenue en U, entre alors en contact avec l'une d'entre elles ou les deux, puis glisse entre les deuxième et premier bras de l'une ou des deux pattes de retenue 18, 18' et se retrouve bloqué entre ces bras, maintenant ainsi l'élément d'habillage 7 accroché à l'élément de retenue 6. Dans cette position, on observe une déformation notable des pattes de retenue 18, 18' et du barreau 11.

Ces parties déformées créent un verrouillage fort empêchant l'éjection d'une ou des parties restées liées à la garniture d'habillage 4, tout en gardant une souplesse de rotation entre les parties 6 et 7, permettant à la garniture 4 de se plier et de se déformer sous la poussée de l'airbag, sans impacter les pièces 6,7 et 21.

L'assemblage selon l'invention présente l'avantage d'être facile à mettre en oeuvre et peu coûteux. En outre, l'assemblage ne nécessite pas de collage de sorte que le positionnement de la structure d'habillage est indépendant de son montage. Par ailleurs, quelque soit la déformation de la paroi de garniture, l'élément d'habillage reste accroché à celle-ci grâce à la mise en prise de l'élément d'habillage et d'une ou des deux pattes de retenue en U de l'élément de retenue. La structure devient alors flexible et flottante mais reste liée à la paroi, l'élément de retenue restant bloqué du côté de la face cachée. La forme en U de la patte de retenue permet ainsi de créer un système d'accrochage souple mais robuste. L'élément de retenue pourra notamment être avantageusement réalisé d'une seule pièce en matériau polymère, notamment choisi parmi les polymères précédemment cités.

## Revendications

1. Assemblage (1) d'une structure d'habillage (2) à une ouverture (3) de paroi de garniture (4), cette paroi de garniture présentant une face cachée (4b) et une face opposée visible (4a), la structure d'habillage comprenant un élément de retenue (6) situé du côté de la face cachée en appui contre celle-ci et un élément d'habillage (7) situé en partie du côté de la face visible et solidarisé à l'élément de retenue (6), l'élément d'habillage (7) présentant un rebord externe (8) encadrant l'ouverture (3) et en appui contre la face visible (4a), un rebord interne (9) traversant l'ouverture (3) et coopérant avec l'élément de retenue (6) du côté de la face cachée (4b), **caractérisé en ce que** le rebord interne définit un cadre dont deux côtés opposés (9a, 9b) sont prolongés par des portions de paroi (10, 10') suivant une direction sensiblement perpendiculaire à la paroi de garniture (4), un barreau (11) s'étendant le long d'un autre côté (9c) du rebord interne (9), à distance de ce dernier, reliant des extrémités desdites portions de paroi, l'élément de retenue (6) comprenant :
- un cadre (15) en forme de U comprenant deux bras opposés (15a, 15b) reliés à une de leurs extrémités par un bras de liaison (15c), ledit cadre (15) en forme de U étant disposé autour du rebord interne (9) de l'élément d'habillage, en coopération avec ce dernier, le cadre (15) étant suffisamment grand pour ne pas traverser l'ouverture (3),
- deux pattes de retenue (18, 18') en forme de U, chaque patte de retenue comprenant un premier bras (18a, 18'a) dont une extrémité est reliée à l'un des bras opposés du cadre en forme de U (15), à distance dudit bras de liaison de ce dernier et à proximité dudit barreau (11), ces premiers bras (18a, 18'a) s'étendant dans un même plan sensiblement parallèle à la paroi de garniture (4), et passant entre le barreau (11) et le côté (9c) du rebord interne (9) le long duquel s'étend le barreau (11), et chaque patte de retenue présentant un deuxième bras (18b, 18'b) s'étendant dans un plan incliné par rapport au plan des premiers bras et dont une extrémité libre est située au moins partiellement en regard d'une face externe du barreau (11) de l'élément d'habillage, à une distance prédéterminée de celle-ci.

2. Assemblage (1) selon la revendication 1, **caractérisé en ce que** l'élément de retenue (6) comprend en outre une nervure de rigidification (17, 17') reliant les premiers bras (18a, 18'a) des pattes de retenue (18, 18'), cette nervure s'étendant de préférence sensiblement parallèlement au barreau (11).

3. Assemblage (1) selon la revendication 2, **caractérisé en ce que** la nervure de rigidification (17, 17') est choisie parmi :
- une nervure de rigidification (17) reliant les premiers bras (18a, 18'a) du côté de reliée au cadre en forme de U (15),
- une nervure de rigidification (17') reliant les premiers bras (18a, 18'a) à distance de reliée au cadre en forme de U (15), entre leur autre extrémité reliée à un deuxième bras (18b, 18'b) et le barreau (11).

4. Assemblage (1) selon l'une quelconque des revendications 1 à 3, **caractérisé en ce que** les deux pattes de retenue (18, 18') sont disposées symétriquement par rapport à un plan médian du cadre en U, ce plan médian étant perpendiculaire à un plan défini par le cadre en U et étant équidistant des bras opposés (15a, 15b) du cadre en forme de U (15).

5. Assemblage (1) selon l'une quelconque des revendications 1 à 4, **caractérisé en ce que** les deuxièmes bras (18b, 18'b) des deux pattes de retenue sont disposés l'un en regard de l'autre.

6. Assemblage (1) selon l'une quelconque des revendications 1 à 5, **caractérisé en ce que** les pattes de retenue (18, 18') sont telles que le plan de chaque deuxième bras (18b, 18'b) définit avec le plan de chaque premier bras (18a, 18'a) un angle compris de 10 à 45°.

7. Assemblage (1) selon l'une quelconque des revendications 1 à 6, **caractérisé en ce que** les premiers bras (18a, 18'a) des pattes de retenue sont chacun reliés au cadre en forme de U (15) par une patte de liaison (18c, 18'c) sensiblement parallèle au barreau (11) et comprenant chacune un logement (17a, 17b) recevant une portion de paroi (10, 10') du rebord interne (9).

8. Assemblage (1) selon l'une quelconque des revendications 1 à 7, **caractérisé en ce que** le rebord interne (9) de l'élément d'habillage (7) présente le long de ses côtés prolongés par les portions de paroi (10, 10'), sur des faces en regard de ces côtés, deux pattes allongées (13a, 13b) s'étendant sensiblement perpendiculairement au barreau (11), et faisant saillie hors de l'élément d'habillage (7) d'un même côté de celui-ci en traversant l'espace séparant le barreau (11) du côté (9c) du rebord interne le long duquel il s'étend.

9. Assemblage (1) selon l'une quelconque des revendications 1 à 8, **caractérisé en ce que** l'élément d'habillage (7) présente un volet (21) obturant l'ouverture de la paroi de garniture.

10. Véhicule comprenant un assemblage (1) selon l'une quelconque des revendications 1 à 9.

## Patentansprüche

1. Montage (1) einer Verkleidungsstruktur (2) in ein Öffnungselement (3) einer Einlagewand (4), wobei diese Einlagewand eine verdeckte Seite (4b) und eine gegenüberliegende sichtbare Seite (4a) aufweist, wobei die Verkleidungsstruktur ein Halteelement (6), das sich auf der Seite der verdeckten Seite an dieser anliegend befindet, und ein Verkleidungselement (7) umfasst, das sich teilweise auf der Seite der sichtbaren Seite befindet und mit dem Halteelement (6) verbunden ist, wobei das Verkleidungselement (7) einen äußeren Rand (8), der die Öffnung (3) umrahmt und an der sichtbaren Seite (4a) anliegt, einen inneren Rand (9), der durch die Öffnung (3) hindurchgeht und mit dem Halteelement (6) auf der Seite der verdeckten Seite (4b) zusammenwirkt, umfasst, **dadurch gekennzeichnet, dass** der innere Rand einen Rahmen definiert, dessen zwei gegenüberliegenden Seiten (9a, 9b) durch Wandabschnitte (10, 10') in eine Richtung im Wesentlichen senkrecht auf die Einlagewand (4) verlängert sind, wobei sie sich ein Balken (11) entlang der anderen Seite (9c) des inneren Randes (9) in einem Abstand zu diesem letztgenannten erstreckt, der die Enden der Wandabschnitte verbindet, wobei das Halteelement (6) umfasst:
- einen U-förmigen Rahmen (15), umfassend zwei gegenüberliegende Arme (15a, 15b), die an einem ihrer Enden durch einen Verbindungsarm (15c) verbunden sind, wobei der U-förmige Rahmen (15) um den inneren Rand (9) des Verkleidungselements mit diesem zusammenwirkend angeordnet ist, wobei der Rahmen (15) groß genug ist, um nicht durch die Öffnung (3) hindurchzugehen,
- zwei U-förmige Halteklauen (18, 18'), wobei jede Halteklaue einen ersten Arm (18a, 18'a) umfasst, von dem ein Ende mit einem der gegenüberliegenden Arme des U-förmigen Rahmens (15) in einem Abstand zu dem Verbindungsarm dieses letztgenannten und in der Nähe des Balkens (11) verbunden ist, wobei sich diese ersten Arme (18a, 18'a) in einer selben Ebene im Wesentlichen parallel zur Einlagewand (4) erstrecken und zwischen dem Balken (11) und der Seite (9c) des inneren Randes (9) verlaufen, entlang der sich der Balken (11) erstreckt, und wobei jede Halteklaue einen zweiten Arm (18b, 18'b) aufweist, der sich in einer geneigten Ebene zu der Ebene der ersten Arme erstreckt, und von dem ein freies Ende zumindest teilweise gegenüber einer Außenseite des Balkens (11) des Verkleidungselements in einem vorbestimmten Abstand zu dieser angeordnet ist.

2. Montage (1) nach Anspruch 1, **dadurch gekennzeichnet, dass** das Halteelement (6) ferner eine Versteifungsrippe (17, 17') umfasst, die die ersten Arme (18a, 18'a) der Halteklauen (18, 18') verbindet, wobei sich diese Rippe vorzugsweise im Wesentlichen parallel zum Balken (11) erstreckt.

3. Montage (1) nach Anspruch 2, **dadurch gekennzeichnet, dass** die Versteifungsrippe (17, 17') ausgewählt ist unter:
- einer Versteifungsrippe (17), die die ersten Arme (18a, 18'a) auf der mit dem U-förmigen Rahmen (15) verbundenen Seite verbindet,
- einer Versteifungsrippe (17'), die die ersten Arme (18a, 18'a) in einem Abstand zu der mit dem U-förmigen Rahmen (15) verbundenen Seite zwischen ihrem anderen Ende, das mit einem zweiten Arm (18b, 18'b) verbunden ist, und dem Balken (11) verbindet.

4. Montage (1) nach einem der Ansprüche 1 bis 3, **dadurch gekennzeichnet, dass** die zwei Halteklauen (18, 18') symmetrisch in Bezug zu einer Mittelebene des U-förmigen Rahmens angeordnet sind, wobei diese Mittelebene auf eine Ebene senkrecht ist, die von dem U-förmigen Rahmen definiert ist, und in gleichem Abstand zu den gegenüberliegenden Armen (15a, 15b) des U-förmigen Rahmens (15) angeordnet ist.

5. Montage (1) nach einem der Ansprüche 1 bis 4, **dadurch gekennzeichnet, dass** die zweiten Arme (18b, 18'b) der zwei Halteklauen einander gegenüberliegend angeordnet sind.

6. Montage (1) nach einem der Ansprüche 1 bis 5, **dadurch gekennzeichnet, dass** die Halteklauen (18, 18') derart sind, dass die Ebene jedes zweiten Arms (18b, 18'b) mit der Ebene jedes ersten Arms (18a, 18'a) einen Winkel von 10 bis 45° definiert.

7. Montage (1) nach einem der Ansprüche 1 bis 6, **dadurch gekennzeichnet, dass** die ersten Arme (18a, 18'a) der Halteklauen jeweils mit dem U-förmigen Rahmen (15) durch eine Verbindungsklaue (18c, 18'c) im Wesentlichen parallel zum Balken (11) verbunden sind, und jeweils umfassend eine Aufnahme (17a, 17b), die einen Wandabschnitt (10, 10') des inneren Randes (9) aufnimmt.

8. Montage (1) nach einem der Ansprüche 1 bis 7, **dadurch gekennzeichnet, dass** der innere Rand (9) des Verkleidungselements (7) entlang seiner durch die Wandabschnitte (10, 10') verlängerten Seiten auf diesen Seiten gegenüberliegenden Seiten zwei längliche Klauen (13a, 13b) aufweist, die sich im Wesentlichen senkrecht auf den Balken (11) erstrecken und aus dem Verkleidungselement (7) auf einer selben Seite desselben herausragen, wobei sie den Raum durchqueren, der den Balken (11) von der Seite (9c) des inneren Randes, entlang dessen er sich erstreckt, trennt.

9. Montage (1) nach einem der Ansprüche 1 bis 8, **dadurch gekennzeichnet, dass** das Verkleidungselement (7) eine Klappe (21) aufweist, die die Öffnung der Einlagewand verschließt.

10. Fahrzeug, umfassend eine Montage (1) nach einem der Ansprüche 1 bis 9.

## Claims

1. Assembly (1) of a lining structure (2) with an opening (3) of a trim wall (4), this trim wall having a concealed face (4b) and a visible opposite face (4a), the lining structure comprising a retaining element (6) situated on the side of the concealed face bearing against the latter and a lining element (7) situated partly on the side of the visible face and secured to the retaining element (6), the lining element (7) having an outer lip (8) framing the opening (3) and bearing against the visible face (4a), an inner lip (9) passing through the opening (3) and cooperating with the retaining element (6) on the side of the concealed face (4b), **characterized in that** the inner lip defines a frame of which two opposite sides (9a, 9b) are prolonged by wall portions (10, 10') in a direction substantially at right angles to the trim wall (4), a bar (11) extending along another side (9c) of the inner lip (9), at a distance therefrom, linking ends of said wall portions, the retaining element (6) comprising:
- a U-shaped frame (15) comprising two opposite arms (15a, 15b) linked at one of their ends by a link arm (15c), said U-shaped frame (15) being arranged around the inner lip (9) of the lining element, cooperating therewith, the frame (15) being sufficiently large not to pass through the opening (3),
- two U-shaped retaining tabs (18, 18'), each retaining tab comprising a first arm (18a, 18'a) of which one end is linked to one of the opposite arms of the U-shaped frame (15), at a distance from said link arm of the latter and in proximity to said bar (11), these first arms (18a, 18'a) extending in one and the same plane substantially parallel to the trim wall (4), and passing between the bar (11) and the side (9c) of the inner lip (9) along which the bar (11) extends, and each retaining tab having a second arm (18b, 18'b) extending in an inclined plane relative to the plane of the first arms and of which a free end is situated at least partially facing an outer face of the bar (11) of the lining element, at a predetermined distance therefrom.

2. Assembly (1) according to Claim 1, **characterized in that** the retaining element (6) also comprises a stiffening rib (17, 17') linking the first arms (18a, 18'a) of the retaining tabs (18, 18'), this rib extending preferably substantially parallel to the bar (11).

3. Assembly (1) according to Claim 2, **characterized in that** the stiffening rib (17, 17') is chosen from among:
- a stiffening rib (17) linking the first arms (18a, 18'a) on the side of linked to the U-shaped frame (15),
- a stiffening rib (17') linking the first arms (18a, 18'a) away from linked to the U-shaped frame (15), between their other end linked to a second arm (18b, 18'b) and the bar (11).

4. Assembly (1) according to any one of Claims 1 to 3, **characterized in that** the two retaining tabs (18, 18') are arranged symmetrically relative to a median plane of the U-shaped frame, this median plane being at right angles to a plane defined by the U-shaped frame and being equidistant from the opposite arms (15a, 15b) of the U-shaped frame (15).

5. Assembly (1) according to any one of Claims 1 to 4, **characterized in that** the second arms (18b, 18'b) of the two retaining tabs are arranged facing one another.

6. Assembly (1) according to any one of Claims 1 to 5, **characterized in that** the retaining tabs (18, 18') are such that the plane of each second arm (18b, 18'b) defines, with the plane of each first arm (18a, 18'a), an angle of from 10 to 45°.

7. Assembly (1) according to any one of Claims 1 to 6, **characterized in that** the first arms (18a, 18'a) of the retaining tabs are each linked to the U-shaped frame (15) by a link tab (18c, 18'c) substantially parallel to the bar (11) and each comprising a recess (17a, 17b) receiving a wall portion (10, 10') of the inner lip (9).

8. Assembly (1) according to any one of Claims 1 to 7, **characterized in that** the inner lip (9) of the lining element (7) has, along its sides prolonged by the wall portions (10, 10'), on faces facing these sides, two elongate tabs (13a, 13b) extending substantially at right angles to the bar (11), and protruding from the lining element (7) on one and the same side thereof by passing through the space separating the bar (11) from the side (9c) of the inner lip along which it extends.

9. Assembly (1) according to any one of Claims 1 to 8, **characterized in that** the lining element (7) has a flap (21) blocking the opening of the trim wall.

10. Vehicle comprising an assembly (1) according to any one of Claims 1 to 9.
